# EUROPÄISCHE PATENTSCHRIFT

(11) **EP 2 873 326 B1**
(45) Veröffentlichungstag und Bekanntmachung des Hinweises auf die Patenterteilung: **13.07.2016**
(21) Anmeldenummer: 14192103.1
(22) Anmeldetag: 14.10.2014
(51) Int. Cl.: A22C 11/04

(54) **ABFÜLLVORRICHTUNG**
FILLING DEVICE
DISPOSITIF DE REMPLISSAGE

(30) Priorität: 15.11.2013 DE 102013223364
(43) Veröffentlichungstag der Anmeldung: 20.05.2015
(62) Teilanmeldung aus: 14188854.5
(73) Patentinhaber: Heinrich Frey Maschinenbau GmbH, 89542 Herbrechtingen-Bolheim (DE)
(72) Erfinder: Frey, Heinrich, 89542 Herbrechtingen (DE)
(74) Vertreter: Manitz, Finsterwald & Partner GbR

(56) Entgegenhaltungen:
- DE-A1- 3 246 782
- DE-B- 1 289 760
- DE-T2- 69 936 310
- FR-A1- 2 884 287

## Beschreibung

Die Erfindung betrifft Vorrichtungen zum, insbesondere kontinuierlichen, Abfüllen von Füllgut, mit einer Mehrzahl von auf einer geschlossenen Bahn, insbesondere auf einer Kreisbahn, umlaufenden und dabei wenigstens einen Einfüllbereich sowie zumindest einen Abgabebereich passierenden Kolben-/Zylinder-Anordnungen, die jeweils einen Zylinder und einen im Zylinder unter Veränderung eines für das Füllgut zur Verfügung stehenden Füllvolumens hin- und herbewegbaren Kolben umfasst.

Derartige Vorrichtungen sind grundsätzlich bekannt und dienen beispielsweise dazu, in Verbindung mit der Herstellung von Würsten eine beispielsweise über einen Fülltrichter zugeführte Wurstmasse, z.B. ein Brät, kontinuierlich über ein sogenanntes Füllrohr in einen Natur- oder Kunststoffdarm zu drücken (vgl. FR2 884 287A1).

Bei herkömmlichen Vorrichtungen kann es beim Befüllen der Zylinder zu Lufteinschlüssen und somit zu einer unerwünschten Qualitätsverschlechterung kommen.

Gemäß EP 1 869 320 B1, aus der eine derartige Abfüllvorrichtung bekannt ist, kann jeder Zylinder mittels eines oder mehrerer diskreter Kanäle von unten evakuiert werden, um Lufteinschlüsse zu reduzieren.

Es ist eine Aufgabe der Erfindung, eine Abfüllvorrichtung der eingangs genannten Art zu schaffen, mit der sich auf besonders einfache Weise eine weitere Verbesserung der Portioniergenauigkeit und der Qualität des abgefüllten Füllgutes erreichen lässt.

Die Lösung dieser Aufgabe erfolgt durch Gegenstände mit den jeweiligen Merkmalen des unabhängigen Anspruchs 1.

Die erfindungsgemäße Vorrichtung ist insbesondere zum Abfüllen eines empfindlichen Produkts geeignet. Das Produkt kann z.B. eine pastöse Masse sein. Dies ist aber nicht zwingend. Es können auch stückige Produkte abgefüllt werden. Bei dem Produkt kann es sich beispielsweise um Rohwurst, vorzugsweise großstückigen, Schinken und/oder ein, vorzugsweise gekochtes, Convenience-Produkt handeln.

Gemäß der Erfindung ist ab Erreichen einer Entlüftungsstellung des Kolbens zwischen dem Kolben und einer Wand des Zylinders als Entlüftungsöffnung ein umlaufender Ringspalt vorhanden, über den das Füllvolumen mit einer Unterdruckquelle in Verbindung steht.

Über den Ringspalt wird eine Verbindung zwischen dem Füllvolumen und der Unterdruckquelle hergestellt, wodurch insbesondere im Füllgut eingeschlossene Luft abgesaugt und aus dem Füllgut entfernt wird. Im Füllgut befinden sich anschließend keine bzw. nur geringe Mengen an eingeschlossener Luft. Die Qualität des Füllguts und die Genauigkeit der Portionsmengen werden dadurch deutlich erhöht.

Es hat sich überraschend gezeigt, dass ein umlaufender Ringspalt als Entlüftungsöffnung im Vergleich zu einem oder mehreren diskreten Kanälen signifikant bessere Ergebnisse liefert.

Bei der Unterdruckquelle kann es sich insbesondere um eine Vakuumpumpe handeln. Diese kann eine Saugleistung von rund 40 m³/h besitzen. Es kann eine, insbesondere digitale, Steuerung für die Unterdruckquelle vorgesehen sein. So kann das Vakuum an das jeweilige Füllgut angepasst werden.

Vor der Unterdruckquelle kann eine Auffangvorrichtung, insbesondere ein Sieb, vorgesehen sein, um Füllgut, welches gegebenenfalls aufgrund des Unterdrucks zusammen mit der Luft durch den Ringspalt abgesaugt wird, an einem Eintritt in die Unterdruckquelle zu hindern.

Der Zylinder kann insbesondere ein Volumen von etwa 200 cm³ bis zu mehreren Litern haben, z.B. von etwa 3 Litern. Grundsätzlich sind auch kleinere oder größere Volumen möglich. Vorzugsweise sind mehrere, insbesondere sechs, baugleiche Zylinder in einem gemeinsamen Rotor gleichmäßig verteilt angeordnet. Der Rotor kann mit Hilfe eines, insbesondere elektrischen, Antriebsmotors in eine Drehbewegung versetzt werden. Die Kolben können hierbei beispielsweise mittels Rollen auf einer Kurvenbahn geführt werden. Aufgrund der Kurvenbahn werden die Kolben im Sinne einer Veränderung der Größe des Füllvolumens hin- und herbewegt. Der Kolbenhub kann hierbei insbesondere in einem Bereich von etwa 20 mm bis 200 mm liegen.

Durch den Rotor kann das Füllgut insbesondere schonend gefördert werden. Da der gesamte Zylinder bewegt wird, findet nur eine geringe Reibung zwischen den mechanischen Teilen und dem Füllgut statt. So kann auch ein empfindliches Füllgut abgefüllt werden. Auch kommt es insbesondere nur zu geringen Querkräften zwischen dem Kolben und dem Zylinder. Auf diese Weise wird ein hoher Wirkungsgrad bei einem geringen Verschleiß erreicht.

Der Einfüllbereich und der Ausgabebereich kann jeweils eine zylindrische Öffnung in einem Deckel umfassen. Der Deckel kann an einer Seite mit einem Trichter verbunden sein, in welchen beispielsweise etwa 250 Liter Füllgut eingefüllt werden können. Der Deckel kann auf den Rotor aufgesetzt werden. Eine Dichtung, beispielsweise ein O-Ring, kann den Deckel insbesondere gegenüber dem Rotor abdichten.

Befindet sich ein Zylinder unterhalb des Einfüllbereichs, so kann das Füllgut aus dem Trichter durch die zylindrische Öffnung des Deckels in den Zylinder gelangen. Der Kolben wird durch die Kurvenbahn nach unten bewegt, so dass eine Saugwirkung entsteht. Das Füllgut wird hierbei in den Zylinder gefüllt. Bei dieser Bewegung vergrößert sich das Füllvolumen.

Ab einer bestimmten Stellung des Kolbens, insbesondere bei einem maximalen Füllvolumen, entsteht der Ringspalt zwischen dem Kolben und der Zylinderwand. Über den Ringspalt wird eine Verbindung zur Unterdruckquelle hergestellt, wodurch die im Füllgut vorhandene Luft abgesaugt wird.

Dreht sich der Rotor nun weiter, wird der Kolben nach oben geschoben und das Füllgut im Abgabebereich aus dem Zylinder gedrückt. Das Füllgut gelangt nun über die zylindrische Öffnung im Deckel z.B. zu einem Füllrohr, über welches das Füllgut z.B. in einen Kunststoff- oder Naturdarm gefüllt werden kann.

Das Füllgut wird auf diese Weise ohne Lufteinschlüsse abgefüllt. Dadurch erhöhen sich die Genauigkeit der Füllmenge und die Qualität der Produkte.

Weiterbildungen der Erfindung sind auch den abhängigen Ansprüchen, der Beschreibung sowie den beigefügten Zeichnungen zu entnehmen.

Gemäß einer Ausführungsform weisen die Zylinderwände jeweils einen Füllbereich auf, der in einen den Ringspalt begrenzenden Entlüftungsbereich mit gegenüber dem Füllbereich vergrößertem Durchmesser übergeht. Der Entlüftungsbereich ist insbesondere gegenüber dem Füllbereich geweitet. Der Ringspalt ist vorzugsweise symmetrisch, d.h. an jeder Stelle gleich breit. Somit wird ein gleichmäßiges Absaugen der eingeschlossenen Luft ermöglicht. Gleichwohl ist es jedoch grundsätzlich auch denkbar, dass der Ringspalt nicht gleichmäßig geformt ist.

Nach einer Weiterbildung weist der Entlüftungsbereich in einem vom Füllbereich ausgehenden Übergangsbereich einen sich stetig vergrößernden Durchmesser auf. Vorzugsweise kann der Übergangsbereich eine Abschrägung, d.h. einen gegenüber der axialen Richtung geneigten Abschnitt, aufweisen. Wird der Kolben in die Entlüftungsstelle gebracht, so weitet sich der Zylinder stetig. Der Ringspalt wird kontinuierlich größer, bis eine maximale Breite erreicht ist. Durch die Abschrägung kann der Kolben zuverlässig wieder aus der Entlüftungsstellung herausbewegt werden. Alternativ ist es jedoch auch möglich, dass der Übergangsbereich beispielsweise eine Stufe umfasst.

Gemäß einer weiteren Ausführungsform ist der Durchmesser des Entlüftungsbereichs mit Ausnahme eines in den Füllbereich übergehenden Übergangsbereichs in axialer Richtung konstant.

Nach einer weiteren Ausführungsform ist bei in der tiefsten Stellung befindlichem Kolben dessen Oberseite zumindest näherungsweise auf der Höhe des unteren Endes des Füllbereichs der Zylinderwand gelegen.

Gemäß der Erfindung ist der Kolben mit einer, als austauschbares Dichtelement ausgebildeten, umlaufenden Dichtung versehen. Die Dichtelemente können ein Gummi- oder Kunststoffmaterial umfassen. Vorzugsweise können harte Kunststoffe wie Polyurethane oder dergleichen verwendet werden. Insbesondere können die Dichtelemente als O-Ringe ausgebildet sein. Befindet sich der Kolben im Füllbereich, so ist dieser durch das Dichtelement gegenüber dem Entlüftungsbereich abgedichtet. Bei im Entlüftungsbereich befindlichem Kolben ist hingegen der Ringspalt zwischen dem Dichtelement und der Zylinderwand vorhanden.

Nach einer weiteren Ausführungsform ist der Ringspalt von einer den größten Außendurchmesser des Kolbens definierenden Dichtlippe der Dichtung begrenzt. Die Breite des Ringspalts bestimmt sich insbesondere einerseits durch den Durchmesser des Entlüftungsbereichs und andererseits durch die Breite der Dichtlippe. Eine große Dichtlippe führt zu einem schmalen Ringspalt und umgekehrt. Je nach gewünschter Größe des Ringspalts können somit verschiedene Dichtungen zum Einsatz kommen.

Gemäß einem weiteren Aspekt der Erfindung befinden sich die Kolben-/Zylinderanordnungen in einem gemeinsamen Rotor, welcher in einer mittels einer Unterdruckquelle beaufschlagbaren Entlüftungskammer angeordnet ist, mit der jedes Füllvolumen ab Erreichen einer Entlüftungsstellung des jeweiligen Kolbens über wenigstens eine Entlüftungsöffnung in Verbindung steht.

Auf diese Weise können sämtliche Füllvolumen unmittelbar mit derselben Entlüftungskammer in Verbindung gebracht werden. Daher muss nicht jeder Zylinder eine separate Leitung zur Unterdruckquelle oder gar eine eigene Unterdruckquelle aufweisen. Es genügt vielmehr eine einzige Unterdruckquelle, beispielsweise eine Vakuumpumpe, welche die gemeinsame Entlüftungskammer evakuiert. Insbesondere kann der gesamte Raum unterhalb des Rotors und/oder um den Rotor herum mittels der Unterdruckquelle evakuiert werden.

Gemäß einer Weiterbildung ist die Entlüftungskammer von einem insbesondere topfförmigen Gehäuse begrenzt und umfasst einen zwischen der Innenwand des Gehäuses und der Außenwand des Rotors gelegenen Ringraum.

Gemäß einem weiteren Aspekt der Erfindung ist ab Erreichen einer Entlüftungsstellung des Kolbens zwischen dem Kolben und einer Wand des Zylinders wenigstens eine Entlüftungsöffnung vorhanden, über die das Füllvolumen mit einer Unterdruckquelle in Verbindung steht, wobei ein Satz unterschiedlicher, insbesondere ringförmiger, Dichtelemente für den Kolben vorgesehen ist, die untereinander austauschbar mit dem Kolben koppelbar sind und unterschiedlich große Entlüftungsöffnungen definieren.

Die Dichtelemente können ein Gummi- oder Kunststoffmaterial umfassen. Vorzugsweise können harte Kunststoffe wie Polyurethane oder dergleichen verwendet werden. Insbesondere können die Dichtelemente als O-Ringe ausgebildet sein. Die Dichtelemente können vorzugsweise am Kolben angeordnet sein und den wirksamen Außendurchmesser des Kolbens definieren.

Abhängig von der Konsistenz des Füllguts können unterschiedliche Dichtelemente, insbesondere mit größeren oder kleineren bzw. breiteren oder schmaleren Dichtlippen, eingesetzt werden. Die unterschiedlichen Dichtelemente können vorzugsweise jeweils verschiedene Farben aufweisen, um eine einfache Zuordnung bzw. Auswahl für den Benutzer zu ermöglichen.

Gemäß einer Ausführungsform weisen die Dichtelemente identische Kopplungsabschnitte für den Kolben und unterschiedliche Dichtabschnitte auf, die jeweils in Abhängigkeit von der Stellung des Kolbens entweder an der Wand des Zylinders abdichtend anliegen oder die Größe der Entlüftungsöffnung definieren. Die Kolben können somit je nach Bedarf mit unterschiedlichen Dichtelementen versehen werden. Dadurch werden die Einsatzmöglichkeiten der Abfüllvorrichtung erhöht.

In einer Weiterbildung weisen die Dichtabschnitte jeweils zumindest eine in radialer Richtung vorstehende Dichtlippe auf und unterscheiden sich hinsichtlich der axialen Position, der radialen Ausdehnung und/oder der Form ihrer Dichtlippen voneinander. Die Ausgestaltung der Dichtlippen kann hierbei in Abhängigkeit von der Konsistenz des Füllguts bestimmt werden. Bei einem Füllgut mit einer vergleichsweise weichen Konsistenz kann eine relativ große Dichtlippe eingesetzt werden, um die Entlüftungsöffnung relativ klein zu halten. Bei festeren Konsistenzen kann hingegen eine relativ kleine Dichtlippe und somit eine größere Entlüftungsöffnung gewählt werden.

Nach einer weiteren Ausführungsform ist zumindest ein Dichtelement vorgesehen, durch welches die Entlüftungsöffnung verschlossen ist. Dies ist insbesondere bei einem sehr weichen bzw. zumindest nahezu flüssigen Füllgut vorteilhaft. Eine Verbindung zur Unterdruckquelle wird in diesem Fall auch dann nicht hergestellt, wenn sich der Kolben im Entlüftungsbereich befindet. Die Abfüllvorrichtung ist auf diese Weise variabel einsetzbar und nicht auf ein Füllgut mit einer bestimmten Konsistenz beschränkt. Unabhängig von der Konsistenz des Füllguts kann somit stets eine hohe Portioniergenauigkeit und Produktqualität gewährleistet werden.

Die Entlüftungsöffnung kann insbesondere als Ringspalt ausgebildet sein. Dieser kann insbesondere eine Breite von 0 mm bis 0,3 mm aufweisen. Insbesondere sind verschiedene Dichtelemente vorgesehen, welche z.B. zu Ringspaltbreiten von etwa 0 mm, 0,05 mm, 0,13 mm bzw. 0,2 mm führen.

Gemäß einer Ausführungsform besteht zwischen dem Einfüllbereich und der Unterdruckquelle, insbesondere einer mittels der Unterdruckquelle beaufschlagbaren Entlüftungskammer für die Kolben-/Zylinderanordnungen, eine permanente oder unterbrechbare Strömungsverbindung. Dabei kann die Strömungsverbindung einen zwischen der Innenwand eines Gehäuses und der Außenwand eines im Gehäuse angeordneten Rotors gelegenen Ringraum und/oder einen die Zylinder abdichtenden, den Einfüllbereich umfassenden Deckel umfasst.

Es hat sich als vorteilhaft erwiesen, wenn auch der Einfüllbereich während des Befüllens evakuiert wird. Dadurch, dass eine Strömungsverbindung zur Unterdruckquelle besteht, muss keine weitere Unterdruckquelle für den Einfüllbereich vorgesehen werden. So ist eine einzige Unterdruckquelle ausreichend, um das Füllvolumen sowohl über den Einfüllbereich, insbesondere also von oben, als auch über die Entlüftungsöffnung, insbesondere also von unten, zu evakuieren. Schlagwortartig wird die erstgenannte Maßnahme auch als "oberes Vakuum" und die zweitgenannte Maßnahme auch als "unteres Vakuum" bezeichnet. Dadurch, dass nur eine einzige Unterdruckquelle für mehrere Funktionen vorgesehen ist, kann der Aufbau der Abfüllvorrichtung vereinfacht werden.

Das Zu- und Abschalten des oberen Vakuums und des unteren Vakuums wird insbesondere automatisch über die Drehstellung des Rotors gesteuert. Ob das untere Vakuum wirksam ist oder nicht, hängt von der Stellung des Kolbens im Zylinder ab, die wiederum - z.B. über eine Kurvenbahn - durch die Drehstellung des Rotors bestimmt ist. Ob ein jeweiliger Zylinder über den Einfüllbereich mit der Unterdruckquelle in Verbindung steht oder nicht, d.h. ob das obere Vakuum wirksam ist oder nicht, hängt davon ab, ob der Einfüllbereich mit der Unterdruckquelle in Verbindung steht oder nicht. Besteht eine solche Verbindung, ist das obere Vakuum wirksam, sobald sich der Zylinder in der entsprechenden Drehstellung befindet.

Gemäß einem möglichen Ablauf kann z.B. mit Beginn des Einfüllens des Füllguts in den Zylinder der Einfüllbereich und somit der Zylinder von oben evakuiert werden. Befindet sich der Kolben schließlich in der Entlüftungsstellung, kann zusätzlich Luft von unten über die Entlüftungsöffnung abgesaugt werden. Auf diese Weise kann sichergestellt werden, dass im Zylinder ein hoher Füllgrad erreicht und das Füllgut bestmöglich entgast wird. Dreht sich der Rotor weiter, kann zunächst das obere Vakuum "abgeschaltet" werden. Bewegt sich der Kolben nach oben über die Entlüftungsstellung hinaus, ist schließlich auch die untere Entlüftungsöffnung wieder verschlossen und die Verbindung zwischen Zylinder und Unterdruckquelle sowohl oben als auch unten unterbrochen.

Nach einer weiteren Ausführungsform umfasst die Strömungsverbindung einen zwischen der Innenwand eines Gehäuses und der Außenwand eines im Gehäuse angeordneten Rotors gelegenen Ringraum. Zwischen diesem Ringraum und dem Einfüllbereich kann ein Überströmweg vorhanden sein. Dieser Überströmweg und der Einfüllbereich sowie der Abgabebereich sind insbesondere in einem Deckel ausgebildet, der das Gehäuse verschließt und den Ringraum sowie die im Rotor ausgebildeten Zylinder gegenüber der Umgebung abdichtet, sofern diese - in Abhängigkeit von der Drehstellung des Rotors - nicht gerade mit dem Einfüllbereich oder dem Abgabebereich in Verbindung stehen.

Es kann vorgesehen sein, dass die Strömungsverbindung, insbesondere an einem Überströmkanal des Überströmweges, mittels eines Ventils geöffnet und geschlossen werden kann. Die Evakuierung der Zylinder über den Einfüllbereich kann somit mit Hilfe des Ventils zu- bzw. abgeschaltet werden.

Sind der Überströmweg und der Einfüllbereich in einem Deckel ausgebildet, kann der Überströmweg eine radial äußere, mit einem den Rotor umgebenden Ringraum kommunizierende Öffnung und eine radial innere Absaugöffnung umfassen, die mit der äußeren Öffnung in Verbindung steht, in Umfangsrichtung von dem Einfüllbereich beabstandet ist und mit dem Einfüllbereich über einen Kanal in Verbindung steht. Dieser Kanal kann als eine Vertiefung an der Unterseite des Deckels ausgeführt sein, bei der es sich z.B. um einen eingefrästen Absatz mit einer Tiefe von beispielsweise 1 mm handelt. Hierdurch ist das Vakuum auch dann noch an den Zylinder angelegt, wenn dieser sich nicht mehr unterhalb der radial inneren Absaugöffnung befindet.

Nach einer weiteren Ausführungsform ist in einem mit der Unterdruckquelle in Verbindung stehenden Bereich eine Reinigungsvorrichtung, insbesondere eine Reinigungsdüse, vorgesehen. Zur Reinigung des Rotors kann die Reinigungsdüse mit einem Reinigungsfluid, insbesondere Wasser, beaufschlagt werden. Hierzu kann beispielsweise ein Wasseranschluss vorgesehen sein. Zudem kann der Rotor in eine relativ langsame Drehbewegung versetzt werden. Der Rotor kann auf diese Weise mit Hilfe eines Sprühstrahls von außen gereinigt werden. Ferner können durch die Düse Produktreste, welche aufgrund der Unterdruckquelle durch die Entlüftungsöffnung und/oder die Strömungsverbindung gesaugt wurden, ausgespült werden. Hierzu kann der Füllprozess unterbrochen und die Reinigungsdüse mit Reinigungsfluid beaufschlagt werden. Das Reinigungsfluid kann anschließend zusammen mit den Produktresten durch einen Saugstutzen abgeleitet werden.

Gemäß einem weiteren Aspekt der Erfindung befinden sich die Kolben-/Zylinderanordnungen in einem gemeinsamen Rotor, welcher in einer mittels einer Unterdruckquelle beaufschlagbaren Entlüftungskammer angeordnet ist, mit der jedes Füllvolumen ab Erreichen einer Entlüftungsstellung des jeweiligen Kolbens über wenigstens eine Entlüftungsöffnung in Verbindung steht, wobei in der oder für die Entlüftungskammer wenigstens eine Reinigungsvorrichtung, insbesondere zumindest eine Reinigungsdüse, vorgesehen oder wirksam ist.

Mit einer derartigen Reinigungsvorrichtung kann erstmals an einer Vakuumfüllmaschine eine CIP-Anwendung (CIP = Cleaning In Place) realisiert werden. Aufgrund der ohnehin vorgesehenen Entlüftungskammer steht hierzu der notwendige Bauraum bzw. Wirkungsbereich für die Reinigungsvorrichtung zur Verfügung.

Dabei kann vorgesehen sein, dass die Entlüftungskammer von einem insbesondere topfförmigen Gehäuse begrenzt ist und einen zwischen der Innenwand des Gehäuses und der Außenwand des Rotors gelegenen Ringraum umfasst, und dass die Reinigungsvorrichtung in dem Ringraum vorgesehen oder wirksam ist.

Ferner kann vorgesehen sein, dass die Reinigungsvorrichtung dazu ausgebildet ist, ein Reinigungsfluid auszustoßen, um eine zumindest teilweise in der Entlüftungskammer angeordnete Einrichtung, insbesondere den Rotor, zu reinigen. Alle hier beschriebenen Aspekte, Ausführungsformen und Merkmale der Erfindung können, insbesondere auch losgelöst von der konkreten Ausgestaltung, in deren Zusammenhang sie erwähnt werden, jeweils miteinander kombiniert werden. Insbesondere können alle Gegenstände der abhängigen Ansprüche untereinander und mit jedem Gegenstand der unabhängigen Ansprüche kombiniert werden.

Die Erfindung wird im Folgenden beispielhaft unter Bezugnahme auf die Zeichnungen beschrieben. Es zeigen:
- Fig. 1a: eine schematische Darstellung einer erfindungsgemäßen Abfüllvorrichtung,
- Fig. 1b: eine Draufsicht auf einen Ringspalt einer erfindungsgemäßen Abfüllvorrichtung,
- Fig. 2a bis 2d: eine vergrößerte Darstellung des Bereichs A gemäß Fig. 1 mit verschiedenen Ausführungsformen einer Dichtlippe, und
- Fig. 3: eine Unteransicht eines Deckels einer erfindungsgemäßen Abfüllvorrichtung.

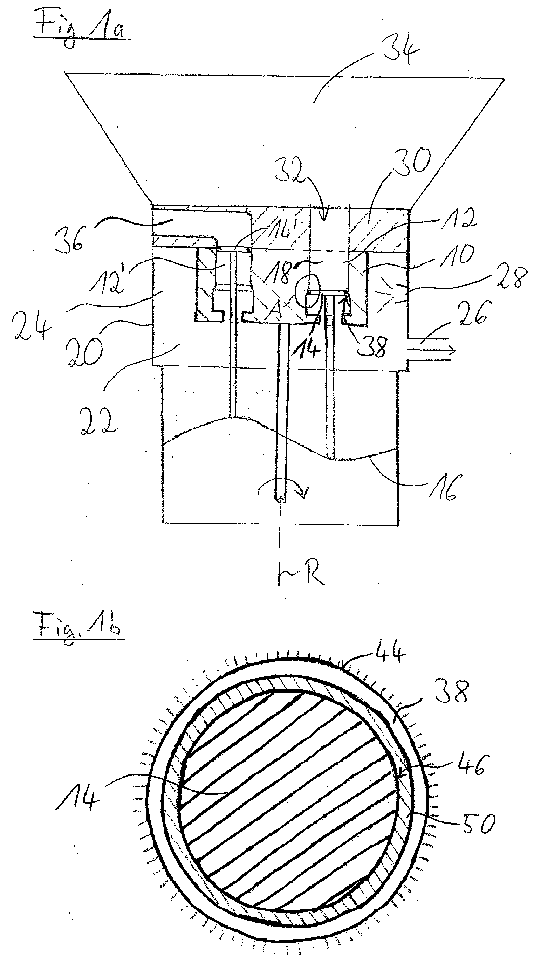

In Fig. 1 ist eine erfindungsgemäße Abfüllvorrichtung gezeigt. Diese umfasst einen Rotor 10, in welchem mehrere Zylinder 12, 12' ausgebildet sind. Jeder Zylinder 12, 12' umfasst einen Kolben 14, 14', welcher hin- und herbewegbar ist. Die Kolben 14, 14' stehen mit einer Kurvenbahn 16 in Verbindung. Wird der Rotor 10 um eine Rotationsachse R gedreht, bewegen sich die Kolben 14, 14' - zwangsgesteuert durch die Kurvenbahn 16 - nach unten bzw. nach oben. Dadurch wird ein für das Füllgut zur Verfügung stehendes Füllvolumen 18 vergrößert bzw. verkleinert.

Dieses Abfüllprinzip ist grundsätzlich bekannt, so dass hierauf nicht näher eingegangen wird.

Der Rotor 10 ist in einem Gehäuse 20 angeordnet. Das Gehäuse 20 begrenzt eine Entlüftungskammer 22, welche einen Ringraum 24 umfasst. An die Entlüftungskammer 22 ist eine als Vakuumpumpe 26 ausgebildete Unterdruckquelle angeschlossen.

Im Ringraum 24 ist eine als Reinigungsdüse 28 ausgebildete Reinigungsvorrichtung vorgesehen. Mit Hilfe von Reinigungsfluid, insbesondere Wasser, kann hierbei beispielsweise der Rotor 10 von außen gereinigt werden.

Das Gehäuse 20 und somit der Ringraum 24 und die Zylinder 12, 12' sind durch einen Deckel 30 verschlossen. Der Deckel 30 umfasst einen als Einfüllöffnung 32 ausgebildeten Einfüllbereich, über welchen das Füllgut aus einem mit dem Deckel 30 verbundenen Trichter 34 in die Zylinder 12, 12' gelangt.

Ferner ist im Deckel 30 ein als Abgabeöffnung 36 ausgebildeter Abgabebereich ausgebildet.

Die Funktionsweise der erfindungsgemäßen Abfüllvorrichtung ist wie folgt:

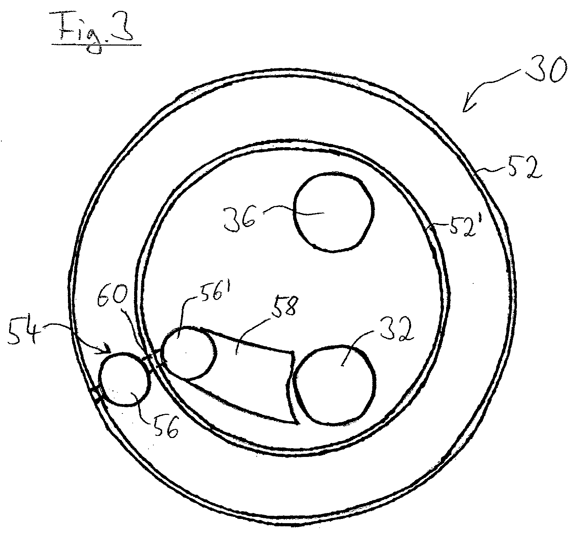

Es wird zunächst Füllgut in den Trichter 34 gefüllt und der Rotor 10 um die Rotationsachse R in Drehung versetzt. Über die Einfüllöffnung 32 gelangt das Füllgut in den Zylinder 12. Der Kolben 14 bewegt sich nach unten, so dass das Füllgut in den Zylinder 12 gesogen wird. Wie im Einleitungsteil und anhand von Fig. 3 erläutert, steht die Einfüllöffnung 32 über Kanäle und Öffnungen im Deckel 30 und über den Ringraum 24 der Entlüftungskammer 22 mit der Vakuumpumpe 26 in Verbindung.

Wenn der Kolben 14 in seine tiefste Stellung gelangt, entsteht zwischen dem Kolben 14 und der Wand des Zylinders 12 ein umlaufender Ringspalt 38. Der Ringspalt 38 kann je nach konkreter Ausgestaltung des Zylinders 12 und des Kolbens 14 bzw. einer vom Kolben 14 getragenen Dichtung 46 (vgl. Fig. 1 b, 2a bis 2d) bereits kurz vor oder erst mit dem Erreichen der tiefsten Stellung des Kolbens 14 entstehen.

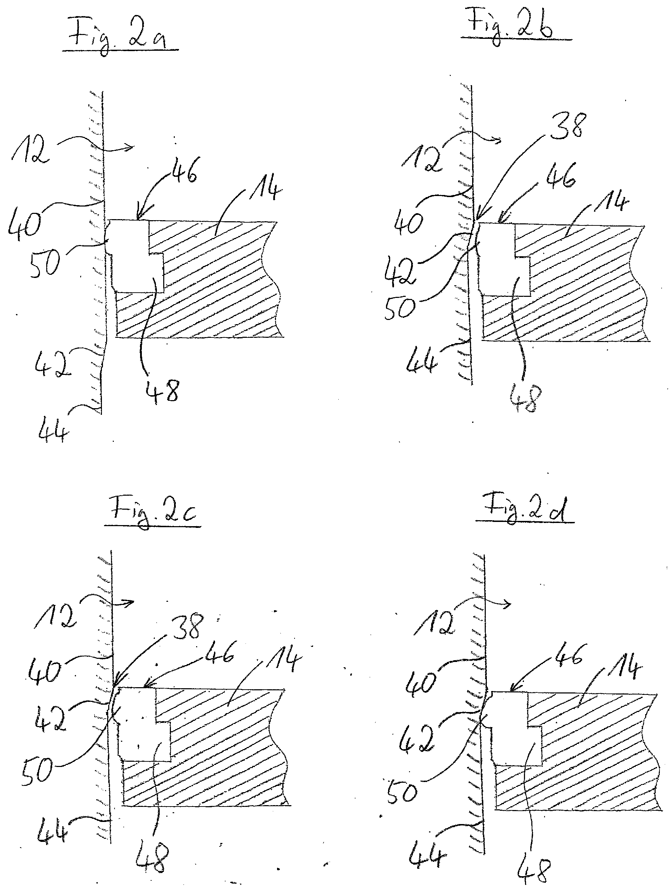

Eine Draufsicht auf den Ringspalt 38 ist in Fig. 1 b gezeigt, die in einem Schnitt senkrecht zur Rotationsachse R des Kolbens 14 die Situation bei geöffnetem Ringspalt 38, d.h. bei in seiner tiefsten Stellung befindlichem Kolben 14 zeigt und somit der Situation in Fig. 2b und Fig. 2c entspricht. Das Entstehen des Ringspalts 38 wird im Zusammenhang mit den Fig. 2a bis 2d näher beschrieben. Der Ringspalt 38 verbindet das Füllvolumen 18 des Zylinders 12 mit der Entlüftungskammer 22 (vgl. Fig. 1). Über den Ringspalt 38 wird somit Luft aus dem Füllgut abgesaugt. Wird der Rotor 10 weiter gedreht, bewegt sich der Kolben 14 wieder nach oben, wodurch der Ringspalt 38 geschlossen wird.

Nach näherungsweise einer halben Umdrehung befindet sich der Zylinder 12 unterhalb der Abgabeöffnung 36. In Fig. 1 ist ein Zylinder 12' in dieser Position dargestellt. Wird der Kolben 14' nach oben bewegt, wird das Füllgut aus dem Zylinder 12' in die Abgabeöffnung 36 gedrückt.

Mit Hilfe der Reinigungsdüse 28 können sowohl der Rotor 10 von außen gereinigt als auch Reste des Füllguts aus der Entlüftungskammer 22 entfernt werden. Diese Reste können entstehen, wenn Füllgut über den Ringspalt 38 oder die Einfüllöffnung 32 eingesaugt wird.

In den Fig. 2a bis 2d ist der Bereich A gemäß Fig. 1 vergrößert dargestellt. Die Wand des Zylinders 12 begrenzt einen Füllbereich 40 sowie einen Entlüftungsbereich 44 mit einem konischen Übergangsbereich 42, wobei der Entlüftungsbereich 44 einen größeren Durchmesser besitzt als der Füllbereich 40.

Der Kolben 14 trägt ein ringförmiges Dichtelement 46 mit einem Kopplungsabschnitt 48 und einem eine Dichtlippe 50 umfassenden Dichtabschnitt. Der Kopplungsabschnitt 48 greift mit einer Einhaknase in eine Aussparung des Kolbens 14 ein. Das Dichtelement 46 ist auswechselbar mit dem Kolben 14 gekoppelt.

In Fig. 2a befindet sich der Kolben 14 oberhalb des Übergangsbereiches 42 und die Dichtlippe 50 liegt an der Zylinderwand abdichtend an, so dass der unter Unterdruck stehende Bereich unterhalb des Kolbens 14 gegenüber dem Füllvolumen des Zylinders 12 abgedichtet ist.

Wird der Kolben 14 nach unten bewegt (vgl. Fig. 2b), so entsteht zwischen der Dichtlippe 50 und der Wand des Zylinders 12 ein umlaufender Ringspalt 38. Über diesen Ringspalt 38 besteht eine Strömungsverbindung zur Entlüftungskammer 22 (vgl. Fig. 1), so dass Luft aus dem Füllvolumen abgesaugt und das im Zylinder 12 befindliche Füllgut entgast wird.

In Fig. 2c ist eine alternative Ausführungsform des Dichtelements 46 dargestellt. Das Dichtelement 46 weist eine einen größeren Außendurchmesser besitzende Dichtlippe 50 auf, so dass der Ringspalt 38 kleiner ist als in der in Fig. 2b dargestellten Ausführungsform.

In Fig. 2d ist eine weitere Ausführungsform eines Dichtelements 46 dargestellt, dessen Dichtlippe 50 einen derart großen Durchmesser besitzt, dass kein Ringspalt 38 entstehen kann. In dieser Konfiguration kann selbst flüssiges Füllgut nicht in die Entlüftungskammer 22 gelangen.

Die verschiedenen Dichtelemente 46 können gegeneinander ausgetauscht werden, so dass die erfindungsgemäße Abfüllvorrichtung an unterschiedliche Konsistenzen des Füllguts angepasst werden kann.

In Fig. 3 ist eine mögliche Ausführungsform eines Deckels 30 der erfindungsgemäßen Abfüllvorrichtung dargestellt, wobei Fig. 3 eine Ansicht auf die Unterseite des Deckels 30 zeigt. Der Deckel 30 umfasst eine äußere O-Ring-Dichtung 52 und eine innere O-Ring-Dichtung 52', um die Zylinder 12, 12' des Rotors 10 und den Ringraum 24 (vgl. Fig. 1) gegenüber der Umgebung abzudichten.

Der Deckel 30 ist so ausgebildet, dass eine Strömungsverbindung 54 zwischen dem Ringraum 24 der Entlüftungskammer 22 und der Einfüllöffnung 32 besteht, d.h. die Zylinder 12, 12' auch von oben entgast werden können.

Hierzu sind im Deckel 30 zwei Öffnungen 56, 56' ausgebildet, welche über einen gestrichelt dargestellten Überströmkanal 60 miteinander verbunden sind. Die radial äußere Öffnung 56 steht mit dem Ringraum 24 in Verbindung und die radial innere Öffnung 56' ist in Umfangsrichtung von der Einfüllöffnung 32 beabstandet.

Der Überströmkanal 60 kann über ein nicht gezeigtes Ventil geöffnet und geschlossen werden. Die Verbindung zwischen der Vakuumpumpe 26 und der Einfüllöffnung 32 kann folglich mit Hilfe des Ventils zu- bzw. abgeschaltet werden. Beispielsweise kann hierzu von radial außen ein im Überströmkanal 60 befindliches zylindrisches Ventilelement (nicht dargestellt) manuell um seine Längsachse verdreht werden, so dass es in einer ersten Drehstellung die Verbindung zwischen den beiden Öffnung 56, 56' unterbricht und in einer z.B. um 180° gedrehten zweiten Drehstellung diese Verbindung freigibt. Hierzu kann das Ventilelement entsprechend nicht-rotationssymmetrisch geformt und z.B. eine in der Freigabestellung wirksame Ausnehmung aufweisen, über welche die freigegebene Strömungsverbindung besteht. Auf diese einfache Weise, d.h. einfach durch Drehen am Ventilelement, kann dann ein Benutzer das "obere Vakuum" wahlweise abschalten oder zuschalten.
Ist das Vakuum zugeschaltet, kann ein unterhalb der radial inneren Öffnung 56' befindlicher Zylinder 12 evakuiert werden. Damit das Vakuum an dem Zylinder 12 auch dann noch anliegt, wenn sich der Zylinder 12 in Richtung der Einfüllöffnung 32 weiterdreht, schließt sich an die radial innere Öffnung 56' ein Kanal 58 in Form eines in die Deckelunterseite eingefrästen Absatzes mit einer Tiefe von z.B. 1 mm an. Dadurch kann das Vakuum gewissermaßen über einen längeren Zeitraum bzw. über einen größeren Drehwinkel des Rotors 10 (vgl. Fig. 1) am Zylinder 12 anliegen.

Hinsichtlich des zeitlichen bzw. von der Winkelstellung des Rotors 10 abhängigen Ablaufs der sowohl von oben über die erläuterte Strömungsverbindung 54 ("oberes Vakuum") als auch von unten über den Ringspalt 38 am Kolben 14 ("unteres Vakuum") erfolgenden Evakuierung des Zylinders 12 bzw. Entgasung des darin befindlichen Füllguts wird auch auf den Einleitungsteil verwiesen. Bevorzugt ist das obere Vakuum etwa vom Beginn der Abwärtsbewegung des Kolbens 14 bis ungefähr zur Mitte des Winkelbereiches wirksam, in welchem sich der Kolben 14 in seiner tiefsten Stellung befindet. Das untere Vakuum ist aktiv, wenn sich der Kolben 14 in seiner tiefsten Stellung befindet. Bevor der Kolben 14 stetig nach oben bewegt wird, ist vorzugsweise ein relativ kurzer Winkelbereich vorgesehen, in welchem der Kolben 14 geringfügig soweit gegenüber seiner tiefsten Stellung angehoben ist, dass der Ringspalt 38 verschlossen, das untere Vakuum also "abgeschaltet" ist.

### Bezugszeichenliste

- 10: Rotor
- 12, 12': Zylinder
- 14, 14': Kolben
- 16: Kurvenbahn
- 18: Füllvolumen
- 20: Gehäuse
- 22: Entlüftungskammer
- 24: Ringraum
- 26: Vakuumpumpe, Unterdruckquelle
- 28: Reinigungsdüse, Reinigungsvorrichtung
- 30: Deckel
- 32: Einfüllöffnung, Einfüllbereich
- 34: Trichter
- 36: Abgabeöffnung, Abgabebereich
- 38: Ringspalt, Entlüftungsöffnung
- 40: Füllbereich
- 42: Übergangsbereich
- 44: Entlüftungsbereich
- 46: Dichtelement, Dichtung
- 48: Kopplungsabschnitt
- 50: Dichtlippe, Dichtabschnitt
- 52, 52': O-Ring-Dichtung
- 54: Strömungsverbindung
- 56, 56': Öffnung
- 58: Kanal
- 60: Überströmkanal

- R: Rotationsachse

## Patentansprüche

1. Vorrichtung zum, insbesondere kontinuierlichen, Abfüllen von Füllgut, mit einer Mehrzahl von auf einer geschlossenen Bahn (16), insbesondere auf einer Kreisbahn, umlaufenden und dabei wenigstens einen Einfüllbereich (32) sowie zumindest einen Abgabebereich (36) passierenden Kolben-/Zylinder-Anordnungen, die jeweils einen Zylinder (12, 12') und einen im Zylinder (12, 12') unter Veränderung eines für das Füllgut zur Verfügung stehenden Füllvolumens (18) hin- und herbewegbaren Kolben (14, 14') umfassen,
wobei ab Erreichen einer Entlüftungsstellung des Kolbens (14, 14') zwischen dem Kolben (14, 14') und einer Wand des Zylinders (12, 12') wenigstens eine Entlüftungsöffnung (38) vorhanden ist, über die das Füllvolumen (18) mit einer Unterdruckquelle (26) in Verbindung steht, und
wobei ein Satz unterschiedlicher, insbesondere ringförmiger, Dichtelemente (46) für den Kolben (14, 14') vorgesehen ist, die untereinander austauschbar mit dem Kolben (14, 14') koppelbar sind und unterschiedlich große Entlüftungsöffnungen (38) definieren.

2. Vorrichtung nach Anspruch 1,
**dadurch gekennzeichnet, dass**
die Dichtelemente (46) identische Kopplungsabschnitte (48) für den Kolben (14, 14') und unterschiedliche Dichtabschnitte (50) aufweisen, die jeweils in Abhängigkeit von der Stellung des Kolbens (14, 14') entweder an der Wand des Zylinders (12, 12') abdichtend anliegen oder die Größe der Entlüftungsöffnung (38) definieren.

3. Vorrichtung nach Anspruch 1 oder 2,
**dadurch gekennzeichnet, dass**
die Dichtelemente (46) jeweils zumindest eine in radialer Richtung vorstehende Dichtlippe (50) aufweisen und sich hinsichtlich der axialen Position, der radialen Ausdehnung und/oder der Form ihrer Dichtlippen (50) voneinander unterscheiden.

4. Vorrichtung nach einem der vorhergehenden Ansprüche,
**dadurch gekennzeichnet, dass**
zumindest ein Dichtelement (46) vorgesehen ist, durch welches die Entlüftungsöffnung (38) in jeder Stellung des Kolbens (14, 14') verschlossen ist.

5. Vorrichtung nach einem der vorhergehenden Ansprüche,
**dadurch gekennzeichnet, dass**
die Zylinder (12, 12') jeweils einen Füllbereich (40) aufweisen, der in einen den Ringspalt (38) begrenzenden Entlüftungsbereich (44) mit gegenüber dem Füllbereich (40) vergrößertem Durchmesser übergeht.

6. Vorrichtung nach Anspruch 5,
**dadurch gekennzeichnet, dass**
der Entlüftungsbereich (44) in einem vom Füllbereich (40) ausgehenden Übergangsbereich (42) einen sich stetig vergrößernden Durchmesser aufweist.

7. Vorrichtung nach Anspruch 5 oder 6,
**dadurch gekennzeichnet, dass**
der Durchmesser des Entlüftungsbereichs (44) mit Ausnahme eines in den Füllbereich (40) übergehenden Übergangsbereichs (42) in axialer Richtung konstant ist.

8. Vorrichtung nach einem der Ansprüche 5 bis 7,
**dadurch gekennzeichnet, dass**
bei in der tiefsten Stellung befindlichem Kolben (14, 14') dessen Oberseite zumindest näherungsweise auf der Höhe des unteren Endes des Füllbereichs (40) des Zylinders (12, 12') gelegen ist.

9. Vorrichtung nach einem der vorhergehenden Ansprüche,
**dadurch gekennzeichnet, dass**
zwischen dem Einfüllbereich (32) und der Unterdruckquelle (26), insbesondere einer mittels der Unterdruckquelle (26) beaufschlagbaren Entlüftungskammer (22) für die Kolben-/Zylinderanordnungen, eine permanente oder unterbrechbare Strömungsverbindung (54) besteht.

10. Vorrichtung nach Anspruch 9,
**dadurch gekennzeichnet, dass**
die Strömungsverbindung (54) einen zwischen der Innenwand eines Gehäuses (20) und der Außenwand eines im Gehäuse (20) angeordneten Rotors (10) gelegenen Ringraum (24) und/oder einen die Zylinder (12, 12') abdichtenden, den Einfüllbereich (32) umfassenden Deckel (30) umfasst.

11. Vorrichtung nach Anspruch 10,
**dadurch gekennzeichnet, dass**
der Einfüllbereich (32) in einem den Ringraum (24) und die Zylinder (12, 12') abdichtenden Deckel (30) ausgebildet ist, wobei die Strömungsverbindung (54) in dem Deckel (30) eine radial äußere, mit dem Ringraum (24) kommunizierende Öffnung (56), eine radial innere, mit der radial äußeren Öffnung (56) in Verbindung stehende und in Umfangsrichtung von dem Einfüllbereich (32) beabstandete Öffnung (56') sowie einen die radial innere Öffnung (56') und den Einfüllbereich (32) verbindenden Kanal (58) umfasst, der als Vertiefung an der dem Rotor (10) zugewandten Unterseite des Deckels (30) ausgebildet ist.

12. Vorrichtung nach einem der vorhergehenden Ansprüche,
**dadurch gekennzeichnet, dass**
in einem oder für einen mit der Unterdruckquelle (26) in Verbindung stehenden Bereich wenigstens eine Reinigungsvorrichtung (28), insbesondere zumindest eine Reinigungsdüse, vorgesehen ist.

## Claims

1. An apparatus for the filling, in particular for the continuous filling, of bulk material, comprising
a plurality of piston-in-cylinder arrangements which run around on a closed path (16), in particular on a circular path, which in so doing pass through at least one filling region (32) as well as at least one dispensing region (36) and which each comprise a cylinder (12, 12') and a piston (14, 14') movable to and fro in the cylinder (12, 12') while changing a filling volume (18) available for the bulk material,
wherein at least one venting opening (38) via which the filling volume (18) is in communication with a vacuum source (26) is present from a reaching of a venting position of the piston (14, 14') between the piston (14, 14') and a wall of the cylinder (12, 12'); and
wherein a set of different sealing elements (46), in particular annular sealing elements, is provided for the piston (14, 14') which are couplable to the piston (14, 14') in a manner replaceable with one another and which define venting openings (38) of different sizes.

2. An apparatus in accordance with claim 1,
**characterized in that**
the sealing elements (46) have identical coupling sections (48) for the piston (14, 14') and different sealing sections (50) which respectively either sealingly contact the wall of the cylinder (12, 12') or define the size of the venting opening (38) in dependence on the position of the piston (14, 14').

3. An apparatus in accordance with claim 1 or claim 2,
**characterized in that**
the sealing elements (46) each have at least one sealing lip (50) projecting in a radial direction and differ from one another with respect to the axial position, the radial extent and/or the shape of their sealing lips (50).

4. An apparatus in accordance with any one of the preceding claims,
**characterized in that**
at least one sealing element (46) is provided by which the venting opening (38) is closed in every position of the piston (14, 14').

5. An apparatus in accordance with any one of the preceding claims,
**characterized in that**
the cylinders (12, 12') each have a filling region (40) which merges into a venting region (44) bounding the annular gap (38) and having a diameter increased with respect to the filling region (40).

6. An apparatus in accordance with claim 5,
**characterized in that**
the venting region (44) has a diameter which increases constantly in a transition region (42) starting from the filling region (40).

7. An apparatus in accordance with claim 5 or claim 6,
**characterized in that**
the diameter of the venting region (44) is constant in an axial direction with the exception of a transition region (42) merging into the filling region (40).

8. An apparatus in accordance with any one of the claims 5 to 7,
**characterized in that**,
with the piston (14, 14') in the lowest position, its upper side is disposed at least approximately at the level of the lower end of the filling region (40) of the cylinder (12, 12').

9. An apparatus in accordance with any one of the preceding claims,
**characterized in that**,
a permanent or interruptible flow communication (54) is present between the filling region (32) and the vacuum source (26), in particular a venting chamber (22) for the piston-in-cylinder arrangements which can be acted on by means of the vacuum source (26).

10. An apparatus in accordance with claim 9,
**characterized in that**
the flow communication (54) comprises an annular space (24) disposed between the inner wall of a housing (20) and the outer wall of a rotor (10) arranged in the housing (20) and/or a cover (30) sealing the cylinders (12, 12') and comprising the filling region (32).

11. An apparatus in accordance with claim 10,
**characterized in that**
the filling region (32) is formed in a cover (30) sealing the annular space (24) and the cylinders (12, 12'), with the flow communication (54) in the cover (30) comprising a radially outer opening (56) communicating with the annular space (24), a radially inner opening (56') communicating with the radially outer opening (56) and spaced apart from the filling region (32) in the peripheral direction as well as a passage (58) which connects the radially inner opening (56') and the filling region (32) and which is formed as a recess at the lower side of the cover (30) facing the rotor (10).

12. An apparatus in accordance with any one of the preceding claims,
**characterized in that**
at least one cleaning apparatus (28), in particular at least one cleaning nozzle, is provided in or for a region communicating with the vacuum source (26).

## Revendications

1. Dispositif pour le remplissage, en particulier en continu, d'un produit à remplir, comprenant une pluralité d'agencements à piston-et-cylindre en recirculation sur une trajectoire fermée (16), en particulier sur une trajectoire circulaire et passant ici devant au moins une zone de remplissage (32) ainsi qu'au moins une zone de remise (36), les agencements incluant chacun un cylindre (12, 12') et un piston (14, 14') déplaçable en va-et-vient dans le cylindre (12, 12') en modifiant un volume de remplissage (18) à disposition pour le produit à remplir, dans lequel à partir du moment où l'on atteint un emplacement de purge d'air du piston (14, 14') il existe entre le piston (14, 14') et une paroi du cylindre (12, 12') au moins une ouverture de purge d'air (38) via laquelle le volume de remplissage (18) est en communication avec une source de dépression (26), et
dans lequel il est prévu un jeu de différents éléments d'étanchéité (46), en particulier de forme annulaire, pour le piston (14, 14'), lesquels peuvent être couplés avec le piston (14, 14') de manière interchangeable les uns avec les autres et définissent des ouvertures de purge d'air (38) de tailles différentes.

2. Dispositif selon la revendication 1,
**caractérisé en ce que** les éléments d'étanchéité (46) comprennent des portions d'accouplement (48) identiques pour le piston (14, 14') et des portions d'étanchement différentes (50), qui soit s'appliquent respectivement avec étanchement en fonction de la position du piston (14, 14') contre la paroi du cylindre (12, 12'), soit définissent la taille de l'ouverture de purge d'air (38).

3. Dispositif selon la revendication 1 ou 2,
**caractérisé en ce que** les éléments d'étanchéité (46) comprennent respectivement au moins une lèvre d'étanchéité (50) dépassant en direction radiale et diffèrent les uns des autres pour ce qui concerne la position axiale, l'extension radiale et/ou la forme de leurs lèvres d'étanchéité (50).

4. Dispositif selon l'une des revendications précédentes,
**caractérisé en ce qu'**il est prévu au moins un élément d'étanchéité (46) au moyen duquel l'ouverture de purge d'air (38) est obturée dans toute position du piston (14, 14').

5. Dispositif selon l'une des revendications précédentes,
**caractérisé en ce que** les cylindres (12, 12') comprennent chacun une zone de remplissage (40), qui se transforme dans une zone de purge d'air (44) délimitant la fente annulaire (38), avec un diamètre agrandi par rapport à la zone de remplissage (40).

6. Dispositif selon la revendication 5,
**caractérisé en ce que** la zone de purge d'air (44) présente, dans une zone de transition (42) partant de la zone de remplissage (40), un diamètre qui augmente en continu.

7. Dispositif selon la revendication 5 ou 6,
**caractérisé en ce que** le diamètre de la zone de purge d'air (44) est constant en direction axiale, à l'exception d'une zone de transition (42) qui se transforme dans la zone de remplissage (40).

8. Dispositif selon l'une des revendications 5 à 7,
**caractérisé en ce que** lorsque le piston (14, 14') se trouve dans la position la plus basse, sa face supérieure est située au moins approximativement à la hauteur de l'extrémité inférieure de la zone de remplissage (40) du cylindre (12, 12').

9. Dispositif selon l'une des revendications précédentes,
**caractérisé en ce qu'**il existe une liaison d'écoulement (54) soit permanente soit susceptible d'être interrompue entre la zone de remplissage (32) et la source de dépression (26), en particulier une chambre de purge d'air (22), susceptible d'être raccordée à la source de dépression (26), pour les agencements à piston-et-cylindre.

10. Dispositif selon la revendication 9,
**caractérisé en ce que** la liaison d'écoulement (54) inclut une chambre annulaire (24) située entre la paroi intérieure d'un boîtier (20) et la paroi extérieure d'un rotor (10) agencé dans le boîtier (20) et/ou un couvercle (30) qui étanche les cylindres (12, 12') et qui inclut la zone de remplissage (32).

11. Dispositif selon la revendication 10,
**caractérisé en ce que** la zone de remplissage (32) est réalisée dans un couvercle (30) qui étanche la chambre annulaire (24) et les cylindres (12, 12'), de sorte que la liaison d'écoulement (54) dans le couvercle (30) inclut une ouverture extérieure radiale (56) en communication avec la chambre annulaire, une ouverture (56') radialement intérieure en communication avec l'ouverture radialement extérieure (56) et écartée en direction périphérique de la zone de remplissage (32), ainsi qu'un canal (58) qui relie l'ouverture radialement intérieure (56') et la zone de remplissage (32), et qui est réalisé sous forme de renfoncement à la face inférieure, tournée vers le rotor (10), du couvercle (30).

12. Dispositif selon l'une des revendications précédentes,
**caractérisé en ce qu'**il est prévu au moins un dispositif de nettoyage (28), en particulier au moins une buse de nettoyage, dans une région en communication avec la source de dépression (26).
